# EUROPEAN PATENT APPLICATION

(11) **EP 1 298 114 A1**
(43) Date of publication of application: **02.04.2003**
(21) Application number: 00927764.1
(22) Date of filing: 15.05.2000
(51) Int. Cl.: C05G 5/00, C05C 11/00

(54) **FERTILIZERS CONTAINING AMMONIUM THIOSULFATE**

(71) Applicant: MITSUI & CO., LTD., Chiyoda-ku Tokyo-to 100-0004 (JP)
(72) Inventor: KISHIMOTO, Kikuo, Matsudo-shi, Chiba 270-2254 (JP); NAGATA, Hiroshi, Hampstead, London NW11 6TG (GB); SUZUKI, Toru, Suginami-ku, Tokyo 166-0003 (JP)
(74) Representative: Goodenough, Nigel
(86) International application number: JP0003090
(87) International publication number: WO01087805

(57) **Abstract**

Ammonium thiosulfate (ATS)-containing fertilizers of the environmental protection type. Powdery fertilizers containing a powdery ATS-containing ***fertilizer***, which is prepared by adding 1 to 50% by weight of an aqueous ATS solution to a material having a base exchange capacity and/or a porous material (hereinafter referred to as ATS-carrying material(s)) followed by mixing and adding an acid or an acidic material to the resultant mixture to thereby adjust the mixture to pH 5.5 to 7.6, and one or more components selected from among nitrogen, phosphoric acid and potassium; or powdery or granular ATS-containing fertilizers obtained by adding the ATS-carrying material(s) to the powdery ***fertilizer*** and further adding 1 to 15% by weight of an aqueous ATS solution followed by mixing.

## Description

### Technical Field of the Invention

The present invention relates to a fertilizer prepared by powdering or granulating an aqueous solution of ammonium thiosulfate (hereinafter referred to as ATS) having nitrogen (N) and sulfur (S) as its components.

### Background of Arts

ATS is commercially distributed in the form of aqueous solutions and its use as a fertilizer is limited to liquid fertilizers. As such, ATS cannot be used in combination with other fertilizers except liquid fertilizers of pH 6 or more, such as those of nitrogen, phosphoric acid and potassium. In addition, since ATS causes chemical damage to plants, it is applied at distances of 5 cm laterally from and 5 cm below each seed.

### Problems to be Solved by the Invention

However, in the conventional use of ATS (liquid fertilizer), fertilizers that can be used in combination therewith are limited to liquid fertilizers. In addition, the site of application is also subject to limitation, as described above; erroneous positioning can cause chemical damage.

Having been developed in view of this drawback in the prior art, the present invention is intended to provide a fertilizer of the environmental protection type that is easy to handle, that avoids plant damage from ATS, and that minimizes the leaching of nitrogen components into rivers, lakes and ponds due to their nitrification in soil.

### Disclosure of Invention

Aiming at accomplishing this objective, the present inventors conducted investigations on various issues as described below.
1) In an attempt to avoid the development of chemical damage due to application of ATS and to broaden its applicability as a fertilizer, the present inventors investigated the mechanism of development of the chemical damage.

As a result of various surveys, the primary factor of development of the chemical damage was identified as ATS-derived sulfur (S) released upon the reaction shown by Formula 1:

(NH₄)₂S₂O₃ + O = (NH₄)₂SO₄ + S (Formula 1)

The inventors made further investigations and found that the chemical damage can be avoided by finely pulverizing (powdering) or granulating the aqueous ATS solution to prevent the resulting sulfur (S) from coming into direct contact with the roots or leaves of the plant.

Accordingly, it is an object of the present invention to provide an ammonium thiosulfate-containing fertilizer as is or as granulated and dried, that is prepared by adding an aqueous solution of ammonium thiosulfate (hereinafter referred to as ATS) at 1-50% by weight to a material of high base exchange capacity (zeolite, bentonite, acid clay, etc.) or a porous material (diatomaceous earth, autoclaved lightweight concrete (hereinafter called ALC) powder, white carbon, etc.) (these materials are hereinafter generically referred to as ATS-carrying materials), and adding in advance an acid or an acidic material to adjust the resulting mixture to a pH of about 7.

It is a second object of the present invention to provide a powdery or granular ammonium thiosulfate-containing fertilizer prepared by adding an aqueous ATS solution at 1-15% by weight to a fertilizer powder containing one or more components selected from among nitrogen, phosphoric acid and potassium with or without addition of an ATS-carrying material.

It is a fourth object of the present invention to provide a granular ammonium thiosulfate-containing fertilizer prepared by spraying an aqueous ATS solution at 1-15% by weight to the surface of fertilizer grains containing one or more components selected from among nitrogen, phosphoric acid and potassium, and subsequently drying the solution or coating the solution with an ATS-carrying material at 1-10% by weight.

Fertilizers produced by the method described above were found to possess good physical properties and to be usable without solidification even after long-term storage. In addition, these fertilizers can be dried without particular chemical reactions even if thermally dried at product temperatures between 70 and 80°C.

### Best Modes Carry out the Invention

The present invention is hereinafter described in more detail by means of the following examples.

Having been developed on the basis of the findings described above, the present invention provides a powdery or granular ATS-containing fertilizer comprising as follows:
1) An aqueous solution containing 70-80% by weight/volume ATS in an amount equivalent to 1.0-50% by weight is added to an ATS-carrying material such as diatomaceous earth, bentonite, acid clay, ALC powder or white carbon. This ATS-carrying material has an acid or an acidic material, such as calcium superphosphate (lime of superphosphate) or monoammonium phosphate (MAP), which is previously added at about 1% by weight to adjust the resulting mixture to a pH between 5.5 and 7.6.
2) An acidic material for pH regulation and ammoniac odor elimination is added to zeolite, diatomaceous earth, bentonite, ALC powder, acid clay or white carbon as an ATS-carrying material. This mixture is granulated while an aqueous ATS solution is added. A granulation aid (binder) is added as necessary.
   It is desirable that the granulation aid (binder) used be gypsum, bentonite, blackstrap molasses, lignin waste liquid, or the like. The granulated product is used as is or dried to yield a finished product.
3) An aqueous ATS solution is added at 1-15% by weight to a fertilizer powder containing one or more components selected from among nitrogen, phosphoric acid and potassium with or without addition of an ATS-carrying material such as diatomaceous earth, and this mixture is used as is or dried to yield a finished product.
4) A fertilizer powder containing one or more components selected from among nitrogen, phosphoric acid and potassium with or without addition of an ATS-carrying material such as diatomaceous earth is granulated while an aqueous ATS solution is added at 5-20% by weight, and the granulated product is used as is or dried to yield an ATS-containing fertilizer.
5) An aqueous ATS solution is sprayed at 4-8% by weight to a granular fertilizer containing one or more components selected from among nitrogen, phosphoric acid and potassium, and coated as necessary with a powder of an ATS-carrying material such as diatomaceous earth, and this mixture is used as is or dried to yield an ATS-containing fertilizer.

The ATS concentrations of the aqueous solutions of ATS used in processes 2) through 5) above are 70-80% by weight/volume as with process 1).

To describe a production method for an ATS-containing fertilizer to which the present invention is advantageously applicable and its fertilizer effects, test examples and working examples are given below. These examples are given for the sake of exemplification and are not to be construed as limitative on the scope of the invention.

### Test Example 1

Effects of amount of ATS added to ATS-carrying material on the physicochemical properties of the resulting mixture

Various amounts of an acidic material and an aqueous ATS solution were added to an ATS-carrying material, and the physicochemical properties of each mixture were examined. The results obtained (Table 1) show that in the absence of an acidic material for pH regulation in the ATS-carrying material (No. 1), the mixture had a pH of about 8 and produced a strong ammoniac odor. When the acidic material was added at 0.1-0.3% by weight, however, the mixture had a pH between 5.5 and 7.6 and was free from an ammoniac odor. Although the ease of granulation was poor except when bentonite was used as an ATS-carrying material, it was improved by adding gypsum or blackstrap molasses at 1-5% by weight as a granulation aid (binder). The test results described above demonstrate that an acid or an acidic material is essential, and that it is desirable to add a binder such as gypsum or blackstrap molasses during granulation.

**Table 1**

| No. | ATS-carrying material | Amount of ATS added | pH regulator | Granulation aid | pH | Ammoniac odor | Ease of granulation |
|---|---|---|---|---|---|---|---|
| 1 | Diatomaceous earth | 20%*¹ | ― | ― | 7.9 | Yes | Poor |
| 2 | Diatomaceous earth | 20% | MAP*²0.1% | _ | 6.8 | Yes | Poor |
| 3 | Diatomaceous earth | 20% | MAP0.2% | _ | 6.8 | No | Poor |
| 4 | Diatomaceous earth | 20% | Calcium superphosphate*³, 0.1% | ― | 6.7 | No | Poor |
| 5 | Diatomaceous earth | 20% | Calcium superphosphate, 0.5% | _ | 5.5 | No | Poor |
| 6 | Diatomaceous earth | 40% | Calcium superphosphate, 0.2% | _ | 6.7 | No | Poor |
| 7 | Diatomaceous earth | 40% | Calcium superphosphate, 0.4% | _ | 6.7 | No | Poor |
| 8 | Diatomaceous earth | 50% | Calcium superphosphate, 0.5% | _ | 6.7 | No | Poor |
| 9 | Bentonite | 40% | Calcium | _ | 7.0 | No | Good |
| | | | superphosphate, | | | | |
| | | | 0.3% | | | | |
| 10 | Bentonite | 40% | Calcium | Gypsum*?, | 7.0 | No | Good |
| | | | superphosphate, | 1% | | | |
| | | | 0.3% | | | | |
| 11 | Bentonite | 40% | Calcium | Gypsum, 5% | 6.6 | No | Good |
| | | | superphosphate, | | | | |
| | | | 0.3% | | | | |
| 12 | Zeolite | 40% | Calcium | _ | 6.8 | No | Poor |
| | | | superphosphate, | | | | |
| | | | 0.3% | | | | |
| 13 | Acid clay | 40% | Calcium | - | 6.7 | No | Poor |
| | | | superphosphate, | | | | |
| | | | 0.3% | | | | |
| 14 | Acid clay | 40% | Calcium | Gypsum, 2% | 6.7 | No | Good |
| | | | superphosphate, | | | | |
| | | | 0.3% | | | | |
| 15 | ALC powder*? | 40% | Calcium | - | 7.2 | No | Poor |
| | | | superphosphate, | | | | |
| | | | 0.3% | | | | |

| | | | | | | | |
|---|---|---|---|---|---|---|---|
| Note:*1 ATS: 75% aqueous solution, pH 8.6 | | | | | | | |
| *2 MAP: Monoammonium phosphate for fertilizers, pH 4.1 | | | | | | | |
| *3 Calcium superphosphate: Superphosphate of lime, pH 2.8 *4 Gypsum: Gypsum as byproduct from stack gas desulfurization facility, pH 7.0 *5 ALC powder: Milled autoclaved lightweight concrete, pH 9.6 | | | | | | | |

### Example 1

40 kg of an aqueous solution containing 75% by weight/volume of ATS was added to 50.9 kg of diatomaceous earth supplemented with 0.1 kg of monoammonium phosphate, an acidic material, to yield 100 kg of an ATS-containing fertilizer having a nitrogen (N) content of 4.4% and a sulfur (S) content of 10.4%.

This fertilizer was found to be an easy-to-handle odorless dry powder and did not solidify even after being kept standing for a long time. The product's pH was 6.7. 5 g of this product was added to 5 kg of soil in a a/5000 pot and 5 g of a 15-15-15 chemical fertilizer was added. *Komatsuna* seeds were sown to this pot in an upland field condition, and seedlings were grown and examined for chemical damage and growth in comparison with an ATS-free fertilizer.

The results obtained showed that no chemical damage was observed with either fertilizer and good growth was achieved. The leaching loss of nitrogen (N) applied was not measured for the ATS-containing fertilizer since it was evident from the results in Table 3 that the loss was minimal.

### Test Example 2

Effects of amount of aqueous ATS solution added to commercially available fertilizer on the physicochemical properties of heated mixture To a commercially available ordinary fertilizer, an aqueous ATS solution was added in various amounts. The physicochemical properties of the resulting mixture and the chemical changes during its heating at a product temperature of about 80°C were examined using trial sample Nos. 16 through 35, as shown in Table 2.

The results obtained (Table 2) showed that the maximum possible amount of aqueous ATS solution added to a fertilizer powder was up to 15%, and that it was desirable from the viewpoint of condition of the mixture to add the aqueous ATS solution at 7-15%. It was also shown that a good ATS-containing fertilizer was obtained by spraying an aqueous ATS solution at 3-15% by weight to a commercially available ordinary granular fertilizer, and coating it with diatomaceous earth or the like. In addition, the powder mixture was shown to permit granulation without the addition of a granulation aid. In addition, these products showed no chemical changes even when thermally dried at product temperatures between 70 and 80°C.

**Table 2**

| No. | Commercially available fertilizer | Amount of ATS added | Condition-imp roving agent | Mixture appearance | pH | Ease of granulation | Changes during heating |
|---|---|---|---|---|---|---|---|
| 16 | MAP powder | 7% | - | Dry | 6.3 | Poor | None |
| 17 | MAP powder | 10% | - | Slightly wet | 6.6 | Fair | None |
| 18 | MAP powder | 10% | Bentonite 3% | Dry | 6.6 | Good | None |
| 19 | MAP powder | 13% | Bentonite 3% | Slightly wet | 6.7 | Good | None |
| 20 | MAP powder | 15% | Diatomaceous earth 2% | Slightly wet | 6.7 | Good | None |
| 21 | MAP powder | 15% | Diatomaceous earth 3% | Slightly wet | 6.7 | Good | None |
| 22 | MAP powder | 20% | Diatomaceous earth 3% | Slightly wet | 6.8 | Good | Slight sulfuric odor |
| 23 | MAP grains | 7% | Diatomaceous earth 4% | Dry | 6.3 | Poor | None |
| 24 | DAP powder | 5% | - | Dry | 7.4 | Fair | None |
| 25 | DAP powder | 7% | - | Dry | 7.6 | Fair | None |
| 26 | DAP powder | 10% | - | Slightly wet | 7.6 | Good | None |
| 27 | DAP powder | 10% | Diatomaceous earth 2% | Slightly wet | 7.6 | Good | None |
| 28 | DAP powder | 13% | Diatomaceous earth 3% | Slightly wet | 7.7 | Good | None |
| 29 | DAP powder | 15% | Diatomaceous earth 3% | Slightly wet | 7.7 | Good | Slight sulfuric odor |
| 30 | DAP powder | 20% | Diatomaceous earth 4% | Slightly wet | 7.8 | Good | Slight sulfuric odor |
| 31 | DAP gains | 4% | Diatomaceous earth 4% | Dry | 7.4 | - | None |
| 32 | DAP gains | 5% | Diatomaceous earth 4% | Dry | 7.6 | - | None |
| 33 | DAP gains | 15% | Diatomaceous earth 4% | Slightly wet | 7.6 | - | None |
| 34 | 15-15-15 chemical fertilizer | 7% | Diatomaceous earth 3% | Slightly wet | 7.0 | Fair | None |
| 35 | 15-15-15 chemical fertilizer | 10% | Diatomaceous earth 3% | Slightly wet | 7.0 | Good | Slight sulfuric odor |
| ATS: A 75% by weight/volume aqueous solution was used. | | | | | | | |

Although diatomaceous earth and bentonite were used as condition-improving agents in this test example, similar effects were obtained with zeolite, ALC, acid clay, and white carbon.

The ease of granulation was evaluated on the basis of the results obtained using a pan-type tester. Regarding changes during heating, the results obtained after heating at a product temperature of 80°C for 40 minutes are shown. It should be noted that the sulfuric odor perceived during heating disappeared after cooling.
DAP refers to diammonium phosphate for fertilizers, having a pH of 7.6.
MAP refers to monoammonium phosphate for fertilizers, having a pH of 4.1.

### Test Example 3

To evaluate the nitrification-suppressing effect of ATS, experiments were conducted in test plots 1 through 4 (Table 3). To the Ando soil with surface humus (Suginami-ku, Tokyo) shown in Table 4, nitrogen was added at the ratios shown in Table 3. At 7, 14 and 21 days after the addition of nitrogen, changes in soil condition were examined by the test method described below.

### Test method

A test sample in an amount equivalent to 25 mg of nitrogen (N) was placed in a 200 ml conical flask containing 50 g of the soil, and desalinated water was added to adjust the soil water content to 60% of the maximum water holding capacity. The flask was placed in a constant-temperature chamber at 30±1°C and removed from the chamber and assayed for ammonium nitrogen and nitrate nitrogen contents on specified days. The results are shown in Tables 5 and 6.

### Results

When the aqueous ATS solution was added in amounts equivalent to N concentrations of 10% or more relative to the N content of ammonium sulfate, a considerably decreased nitrification rate of 13.6% was obtained as compared with the value of 30.4% obtained without the addition of ATS.

This finding demonstrates that it is desirable to add ATS at 10% or more.

**Table 3**

| Test Plots | | |
|---|---|---|
| Test Plots | Mixing ratio (%) of nitrogen added | |
| | Aqueous solution of ATS | Ammonium sulfate |
| 1) | 0% | 100% |
| 2) | 5% | 95% |
| 3) | 10% | 90% |
| 4) | 15% | 85% |
| Note: The amount of N added per plot was 25 mg. | | |

**Table 4**

| Test Sample Soil | | | |
|---|---|---|---|
| Ando soil with Surface Humus (Suginami-ku, Tokyo) | | | |

| pH | | CEC (meq/dry soil) | Maximum water holding capacity (%) |
|---|---|---|---|
| H₂O | KCL | | |
| 5.6 | 4.9 | 36.1 | 105 |

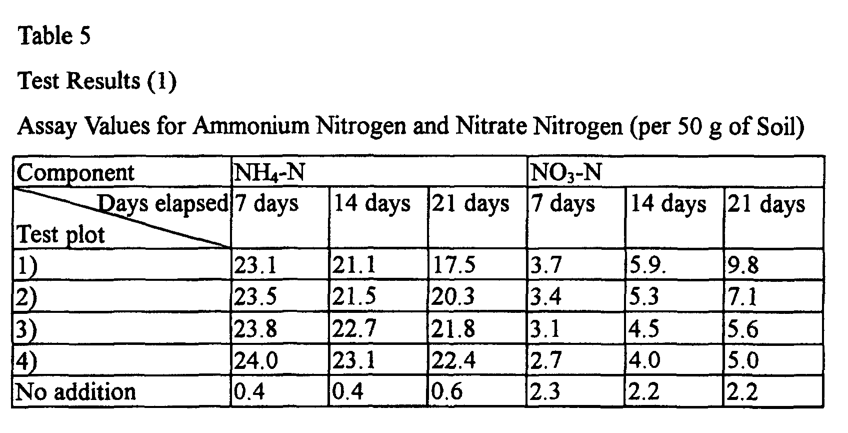

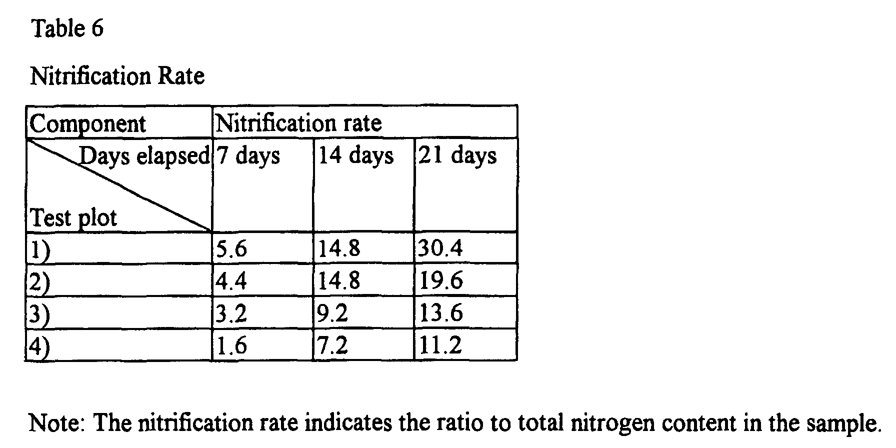

### Example 2

88 kg of a powder of diammonium phosphate (DAP) was placed in a pan-type granulating machine and granulated while 12 kg of a 75% by weight/volume aqueous ATS solution, to yield 100 kg of a fertilizer. The granulated product obtained was found to be dry grains of pH 7.6 containing 19.1% of N, 40.5% of P₂O₅ and 3% of S.

This granulated product was dried at a product temperature of 80°C for 40 minutes to yield 97 kg of a finished product. 5 g of this fertilizer was added to 5 kg of soil in a a/5000 pot. *Komatsuna* seeds were sown to this pot in an upland field condition, and seedlings were grown and examined for chemical damage and growth. The results obtained showed that there was no chemical damage due to ATS, and that the seedlings exhibited good growth.

### Example 3

92 kg of granular DAP was placed in a pan-type granulating machine, and 5 kg of a 75% by weight/volume aqueous ATS solution was sprayed. Subsequently, the granules were coated while 3 kg of diatomaceous earth, a porous ATS-carrying material, was added. The coated product was thermally dried at a product temperature of 80°C for 40 minutes. The thermally dried product was found to have a pH of 7.5 and to contain 17.4% of N, 43.9% of P₂O₅ and 1.3% of S. *Komatsuna* was cultivated in the same manner as Example 2 and the seedlings exhibited good growth.

### Example 4

To 41 kg of the ATS-containing DAP-based granular dry fertilizer obtained in Example 2, 16 kg of granular ammonium sulfate, 12 kg of granular urea and 28 kg of granular potassium chloride were added. Furthermore, 3 kg of diatomaceous earth was added as an anti-solidification to yield 100 kg of a BB fertilizer.

This fertilizer is a high-content composite fertilizer containing 16.7% of N, 16.6% of P₂O₅, 16.8% of K₂O and 2.1% of S. *Komatsuna* was cultivated in the same manner as Example 2 to evaluate the fertilizer efficiency of this fertilizer in comparison with an ATS-free control plot. The results obtained showed that the seedlings exhibited good growth in both plots.

### Industrial Applicability

By powdering or granulating ATS, whose handlability and applicability are limited due to its form of distribution as a liquid, by the present invention using an ATS-carrying material, various effects are obtained as follows:
1) Transport, storage and handling of ATS are facilitated.
2) Chemical damage from ATS is avoided.
3) Mixing with ordinary fertilizers other than liquid fertilizers is permitted. When mixed with a nitrogen fertilizer, in particular, the ATS-containing fertilizer of the present invention reduces the leaching loss of N and contributes to the suppression of eutrophication of lakes, ponds and rivers because the nitrification of nitrogen is suppressed.
4) Because the biological availability of fertilizer applied, especially that of N improves, the amount of fertilizer applied is reduced.

## Claims

1. A powdery ammonium thiosulfate-containing fertilizer prepared by adding an aqueous solution of ammonium thiosulfate (hereinafter referred to as ATS) to a material of high base exchange capacity and/or a porous material (hereinafter referred to as an ATS-carrying material) at 1-50% by weight, and adding an acid or an acidic material to adjust the resulting mixture to a pH between 5.5 and 7.6.

2. A powdery or granular ammonium thiosulfate-containing fertilizer prepared by adding an aqueous ATS solution at 1-15% by weight to a fertilizer powder containing one or more components selected from among nitrogen, phosphoric acid and potassium with or without the addition of an ATS-carrying material.

3. A granular ammonium thiosulfate-containing fertilizer prepared by granulating an ATS-carrying material while an aqueous ATS solution is added, wherein the concentration of said aqueous ATS solution is 5-20% by weight.

4. A granular ammonium thiosulfate-containing fertilizer prepared by spraying an aqueous ATS solution at 1-15% by weight to the surface of fertilizer particles containing one or more components selected from among nitrogen, phosphoric acid and potassium, and subsequently drying the particles or coating them with an ATS-carrying material at 1-10%.

5. The granular or powdery ammonium thiosulfate-containing fertilizer of any one of claims 1 through 4, wherein said ATS-carrying material is zeolite, bentonite, acid clay, or a porous material selected from among diatomaceous earth, autoclaved lightweight concrete (hereinafter called ALC) powder and white carbon.
